# EUROPEAN PATENT SPECIFICATION

(11) **EP 0 721 414 B1**
(45) Date of publication and mention of the grant of the patent: **18.06.1997**
(21) Application number: 94930453.9
(22) Date of filing: 20.09.1994
(51) Int. Cl.: B64D 45/00

(54) **VARIABLE PRIORITY COCKPIT WARNING AND DISPLAY SYSTEM**
COCKPIT WARNUNGS-UND ANZEIGESYSTEM MIT WECHSELNDEM VORRANG
SYSTEME AVERTISSEUR ET DE VISUALISATION A PRIORITE VARIABLE, POUR UNE CABINE DE PILOTAGE

(30) Priority: 30.09.1993 US 129641
(43) Date of publication of application: 17.07.1996
(73) Proprietor: UNITED TECHNOLOGIES CORPORATION, Stratford, CT 06497-9129 (US)
(72) Inventor: PARKINSON, Gerald, W., Shelton, CT 06484 (US); BRADFORD, Michael, Orange, CT 06477 (US)
(74) Representative: Klunker . Schmitt-Nilson . Hirsch
(86) International application number: US9410594
(87) International publication number: WO9509103

(56) References cited:
- EP-A- 0 364 283
- FR-A- 2 343 223
- US-A- 3 247 498
- US-A- 4 072 924
- US-A- 4 072 925
- US-A- 4 619 110
- US-A- 4 970 492
- US-A- 5 121 112

## Description

### Technical Field

The present invention relates to a warning and display system for an aircraft cockpit and more particularly to an improved system for upgrading or varying the priority level of various displays and audible signals within an aircraft cockpit depending on the aircraft operating environment and equipment status.

### Background of The Invention

Aircraft cockpit control panels typically display various items of information for a pilot to view. Each of the informational items is in a distinct location, and each location has a varying level of importance so that the pilot knows how important the informational item or message is by its location on the panel. Additionally, informational items or messages are color coded, based on their importance, with green being advisory, yellow being caution, and red being warning, further advising the pilot of the priority level of the message.

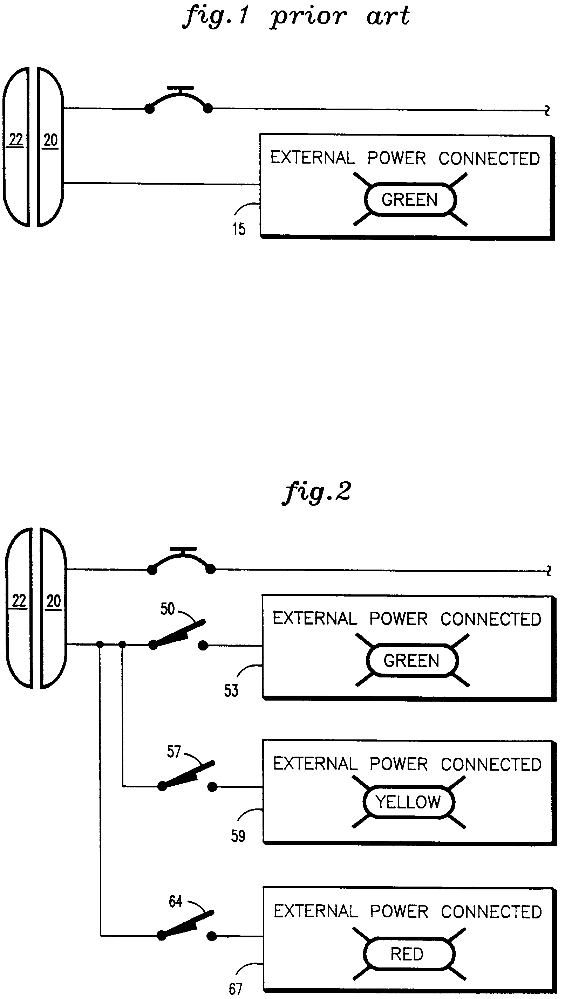

Fig. 1 shows an example of the current methods of displaying information or messages to a pilot. In the example of Fig. 1, an "External Power Connected" advisory indicator 15 is shown as being displayed when an external power connector 22 is attached to an aircraft receptacle 20. The priority level of the "External Power Connected" advisory message does not change in response to a change in aircraft status, and therefore if the aircraft is idle or if the aircraft begins to taxi or take off, the message will continue to have the same priority.

The failure to change the priority of cockpit indicators in response to changes in aircraft operational status poses a problem with respect to green advisory lights that are a low priority, and therefore, are sometimes missed or ignored by pilots. It is sometimes even common practice to fly with some advisory lights on, such a "De-Ice System On" light. It is therefore possible for a pilot to negligently or inadvertently ignore an "External Power Connected" advisory light, a "Gust Lock On" advisory light or other advisory lights and attempt to take off with the advisory condition in existence. Under these circumstances, a great deal of damage may occur to the aircraft or external equipment when the aircraft changes operational mode form ground idle to taxi or take off.

European Patent Application Publication No. 0 364 283 discloses an apparatus for selectively providing indicators to a pilot of an aircraft to thereby appraise the pilot of the operational status of his life support systems. The life support system includes at least a pressurization system and a breathing gas supply system. The apparatus is responsive to both the operating condition of the pressurization system and the breathing gas supply system to provide minimum warnings to the pilot thereby to improve the effectiveness of the warnings.

United States patent no. 4,072,959 discloses a warning system for automotive vehicles which provides a plurality of abnormality detectors which, when an abnormality occurs, activates an indication to provide an indication to a driver of an abnormal condition. Additionally, an indication is provided to the driver of what action should be taken depending on the degree of the abnormal situation.

### Summary of the Invention

Objects of the invention include the provision of an improved cockpit warning and display system for varying or upgrading the priority level of helicopter cockpit displays and helicopter cockpit audible signals based on changes in equipment status and changes in the helicopter operating environment as indicated by the speed of the helicopter main rotor.

A helicopter cockpit warning and display system comprises a display means for providing one or more variable priority indications to a pilot, each of the one or more variable priority indications being associated with corresponding helicopter equipment. Means are provided for monitoring the operational status of the helicopter equipment and for providing equipment status signals indicative thereof. Signal processing means are responsive to the equipment status signals for controlling the priority level of each of the one or more variable priority indications with each of the one or more variable priority indications having a priority level corresponding to the operational status of the corresponding helicopter equipment. According to the invention, means are provided for monitoring the operational status of the helicopter main rotor and for providing operational status signals indicative of the speed of the helicopter main rotor and the signal processing means is further responsive to the operational status signals for comparing the magnitude of the operational status signals to threshold levels, each threshold level corresponding to a different priority indication, and the signal processing means varies the priority of one or more of the variable priority indications when the magnitude of an operational status signal exceeds a threshold level and the operational status of the helicopter equipment remains unchanged.

The present invention provides a significant improvement over the prior art because cockpit indications are modified not only based on equipment status, but also based on the helicopter operating environment as indicated by the speed of the helicopter main rotor. Therefore, a situation that is benign or even desirable under one set of operating conditions is given a low priority and the same situation may be given a high priority when the operational status of the helicopter changes such that pilot action is required. Therefore, the invention provides indications that are based not only upon the degradation or operation of the system itself, but also on other operation conditions.

The foregoing and other objects, features and advantages of the present invention will become more apparent in light of the following detailed description of exemplary embodiments thereof, as illustrated in the accompanying drawings.

### Brief Description of the Drawings

Fig. 1 is a schematic block diagram of a prior art cockpit warning and display system;
Fig. 2 is a schematic block diagram of an aircraft cockpit warning and display system of the present invention;
Fig. 3 is a schematic block diagram of an aircraft mission equipment package for implementing the cockpit warning and display system of Fig. 2;
Fig. 4 is a logic flow diagram of a routine implemented by mission equipment package of Fig. 3 for implementing the cockpit warning and display system of the present invention; and
Fig. 5 is an alternative embodiment of the logic flow diagram of Fig. 4.

### Best Mode for Carrying out The Invention

The present invention provides an improved cockpit warning and display system having indications the priority levels of which change in response to changes in aircraft operating environment. For ease of description and understanding, the system of the present invention will be described with respect to the cockpit indications for an external power connection on a helicopter. The system of the present invention is applicable to an indication the priority level of which changes in response to changes in the helicopter operating environment, as will be described in greater detail hereinafter.

Referring to Fig. 2, a helicopter (not shown) is provided with a receptacle 20 for receiving an external power connection 22. Typically, when a helicopter is secured in a non-operational (static) condition, e.g., landed, stored, tied-down, etc., with the engines turned off, external power is supplied to the helicopter via the external connection 22 and receptacle 20 to power electrical and avionics systems without discharging the helicopter's storage batteries (not shown).

It is desirable to vary the priority level of the cockpit "External Power Connected" indication based on the operational status of the helicopter. When the helicopter is static, a normal condition exists when external power is being supplied to the helicopter, and therefore it is desirable to provide the pilot with only an advisory indication that the external power is connected. The advisory indication is typically indicated by a green light on a helicopter Caution/Advisory panel. If the helicopter engines are operating with the main rotor rotating at a speed above a threshold speed, it may be desirable to upgrade from the advisory indication to a caution indication. For purposes of describing the present invention, if the helicopter rotor speed (NR) is greater than 80% of rated speed then the External Power Connected indication is upgraded from an advisory indication to a caution indication. The caution is typically indicated by a yellow light on the Caution/Advisory panel. It is desirable to upgrade the External Power Connected indication from advisory to caution when rotor speed is greater than 80% of its rated speed because this change in helicopter operational status is indicative of the helicopter preparing to take off. If the helicopter continues to operate with rotor speed greater than 80% of its rated speed, and either the wheel brakes are released or an indication is provided that the weight is off the helicopter wheels, then the priority level of the External Power Connected indicator is increased from caution to warning. A warning indication is typically a red light on the cockpit Master Warning panel. A warning indication is provided under these conditions because if the external power cable is still connected to the helicopter when it is taxiing or taking off, significant damage may occur to the helicopter or the external power supply.

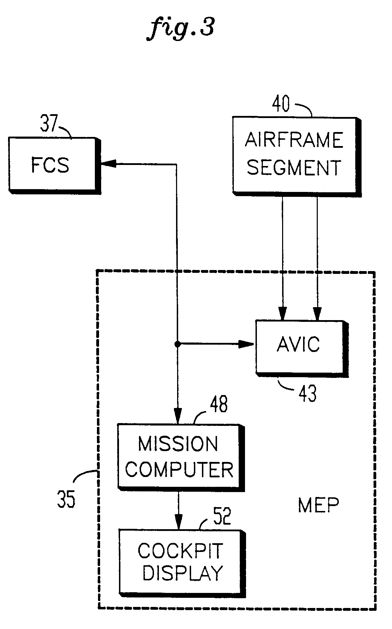

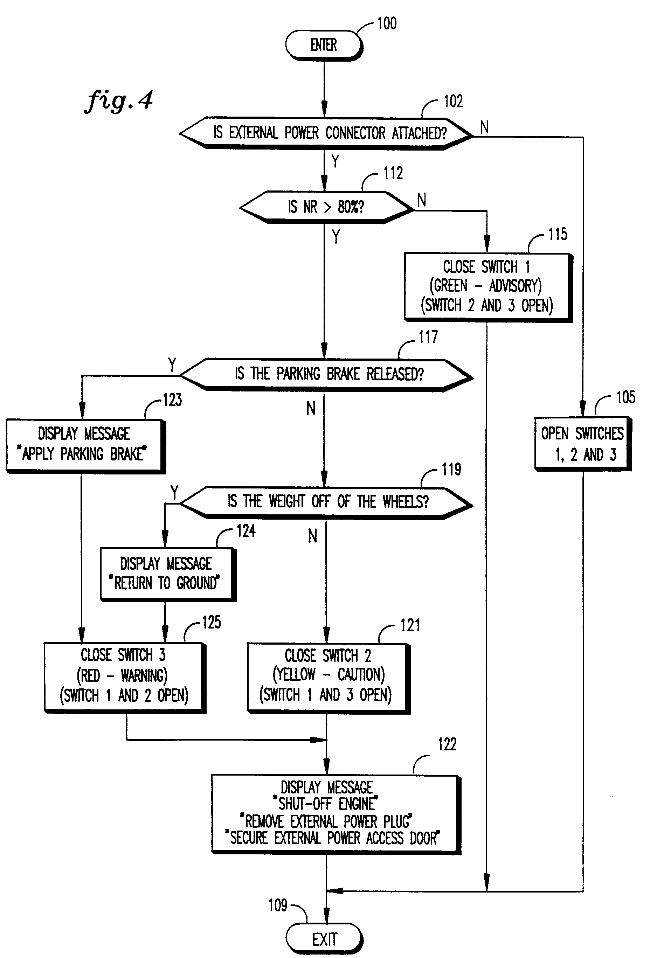

Referring to Figs. 2 and 3, a helicopter mission equipment package (MEP) 35 receives signals indicative of helicopter operational status and equipment status for controlling the cockpit indications for the external power connection. A flight control segment (FCS) 37 provides the MEP 35 a redundant weight on wheels indication and a rotor speed signal, and an airframe segment 40 provides the MEP 35 an indication of the parking brake status and the external power connection status via an Air Vehicle Interface and Control (AVIC) unit 43. Typically, the flight control segment sensors include triple redundant sensors to develop the rotor speed signal and the weight on wheels signal. The airframe sensors use a ground isolation resistive circuit approach to enable the AVIC units to detect airframe open-circuit and ground faulted wiring. The flight control segment 37 and AVIC unit 43 provide a mission computer 48 with a validity bit to indicate that each signal is acceptable for use. The mission computer 48 performs the subroutine of Fig. 4 for providing cockpit displays 52, e.g., the cockpit Caution/Advisory panel or Master Warning panel, with the appropriate external power connection indication.

Still referring to Figs. 2 and 3, when the mission computer 48 receives an indication that the external power connector is installed, it checks the status of the main rotor, the parking brake, and the weight on wheels signal to determine the appropriate cockpit indication. If the rotor speed is less than 80%, a first switch 50 is closed to thereby provide the cockpit with an advisory indication 53 for the external power connection. If the rotor speed is greater than 80% of its rated speed and the parking brake is engaged and the helicopter weight is on its wheels, then a second switch 57 is closed to thereby provide a caution indication 59 for the external power connection. Additionally, a "SHUT OFF ENGINE, REMOVE EXTERNAL POWER PLUG, SECURE EXTERNAL POWER ACCESS DOOR" message may be displayed to the pilot on the Caution/Advisory panel to indicate the action required to terminate the external power connection before taxiing or take off of the helicopter. Finally, if the helicopter rotor speed is greater than 80% of its rated speed and either the parking brake is released or the weight is off the wheels, a third switch 64 is closed to provide a warning indication 67 for the external power connection on the Master Warning panel. Also, either an "APPLY PARKING BRAKE" or "RETURN TO GROUND" message is displayed on the Caution/Advisory panel along with the message indicating that the external power connection should be secured.

The mission computer 48 performs the subroutine of Fig. 4 for controlling the external power connection indication on the cockpit displays 52. Referring to Fig. 4, the routine is entered in a step 100, and the mission computer checks if the external power connector is attached in a test 102. If the results of the tests 102 are negative, then no external power connection indication is required and a step 105 is performed wherein switches 1, 2, and 3 are opened. The subroutine then returns in a step 109.

If the results of the test 102 are positive, then the external power connection is attached, and a test 112 is performed wherein the mission computer checks if rotor speed is greater than 80%. If the results of the test 112 are negative, then a step 115 is performed wherein switch 1 is closed, switch 2 and 3 are opened to thereby provide an advisory indication for the external power connection. The subroutine then returns in the step 109. However, if the results of the test 112 are positive, a test 117 is performed wherein the mission computer checks if the parking brake is released. If the results of the test 117 are negative, a test 119 is performed wherein the mission computer checks if the helicopter weight is off the wheels. If the results of the test 119 are also negative, then a step 121 is performed wherein switch 2 is closed and switch 1 and 3 are opened to thereby provide a yellow caution advisory on the Caution/Advisory panel. Next, a step 122 is performed wherein the "SHUT OFF ENGINE, REMOVE EXTERNAL POWER PLUG, SECURE EXTERNAL POWER ACCESS DOOR" messages are displayed to the pilot on the Caution/Advisory panel 52. The subroutine then returns in the step 109.

If the results of the test 117 are positive, external power is connected with rotor speed greater then 80% of NR and the parking brake is released. Therefore steps 123 and 125 are consecutively performed wherein the message "APPLY PARKING BRAKE" is displayed on the Caution/Advisory panel and switch 3 is closed and switch 1 and 2 are open to thereby provide a warning indication on the Master Warning panel . Next, step 122 is performed wherein the pilot is instructed to secure the external power connection. The subroutine then returns in the step 109. Similarly, if the results of the test 119 are positive, steps 124 and 125 are consecutively performed wherein the message "RETURN TO GROUND" is displayed on the Caution/Advisory panel and switch 3 is closed and switch 1 and 2 are open to thereby provide warning indication on the Master Warning panel. Next, step 122 is performed wherein the pilot is instructed to secure the external power connection. The subroutine then returns in the step 109.

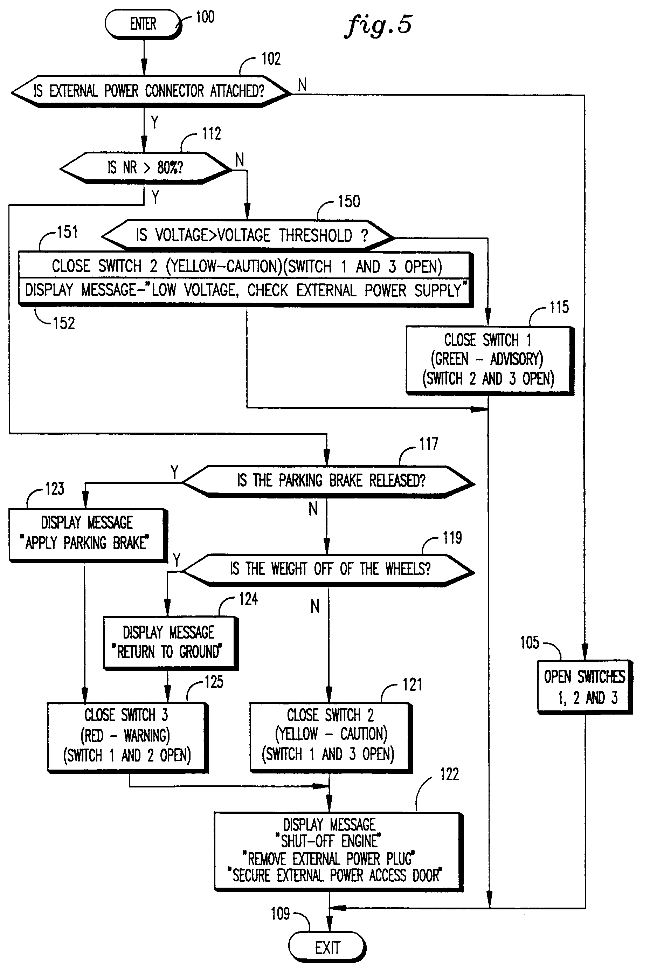

The External Power Connection example described thus far is intended to be exemplary, however, a more sophisticated system may be provided if desired. For example, the system has been described thus far as having only two equipment status conditions, i.e., external power not installed or external power installed. A third equipment status may include an external power installed condition with an accompanying low voltage or low currant condition. In this case, it may be desirable to increase the External Power Connection indication priority level from advisory to caution so that an operator may take appropriate action to prevent discharge of the aircraft's storage batteries. This type of indication can be used in conjunction with the present invention as illustrated in Fig. 5. Referring to Fig. 5, steps and test 150 through 152 have been added to provide a caution indication in response to the external power supply voltage falling below a threshold voltage. The subroutine illustrated in Fig. 5 still provides the desired change in External Power Connection indication priority level in response to a change in helicopter operational status.

The invention has been described thus far with respect to the External Power Connected indication on the cockpit display panels. However, the invention is applicable to any aircraft indication the priority level of which should change in response to changes in aircraft operational status. In Table 1 below, several examples of cockpit indications are provided together with the applicable priority level and corresponding aircraft operational status:

**TABLE 1**

| **INDICATION** | **PRIORITY LEVEL** | **CONDITIONS** |
|---|---|---|
| GUST LOCK ON | ADVISORY | ENGINES OFF |
| | CAUTION | NR>80% |
| PARKING BRAKE | ADVISORY | NR =0 |
| | CAUTION | NR>90% AND LANDING GEAR DOWN |
| TAIL WHEEL LOCK | ADVISORY | NR = 0 OR NR>90% AND WEIGHT OFF WHEELS |
| | CAUTION | NR >90% AND WEIGHT ON WHEELS |
| BUDDY START CABLE | ADVISORY | ATTACHED AND NR<80% |
| | CAUTION | ATTACHED AND NR>80% |
| | WARNING | ATTACHED AND NR>80% AND EITHER PARKING BRAKE OFF OR WEIGHT OFF WHEELS |

The invention was described as using a cockpit Caution/Advisory panel and Master Warning panel for providing the pilot with various indications and messages. However, any suitable panel or display may be used with the present invention such as a warning panel, multifunction display panel, master warning panel, etc. All that is required is that the pilot be provided with appropriate indications the priority level of which change in response to changes in aircraft operating status.

Although the mission equipment package was described herein as receiving information indicative of helicopter operational status from the airframe segment via an Air Vehicle Interface and Control unit and the flight control segment, any suitable method of providing information indicative of helicopter operational status may be used in accordance with the present invention. For example, sensors may provide signals indicative of helicopter operational status directly to the mission computer. Additionally, the mission equipment package was described herein as comprising a mission computer containing subroutines such as the subroutine of Fig. 4 for varying the priority level of various displays and audible signals in response to changes in aircraft operational status. However, the indication control of the present invention may also be implemented using equivalent dedicated digital or analog hardware, as is well known in the art.

It may be desirable to provide an audible alarm or audible instructions to the pilot in response to certain caution or warning indications. The alarm may be a tone or other suitable audible signal to attract the pilot's attention. The instructions may be recorded on an audio tape or be a computer generated audio message to provide the pilot with appropriate instructions in response to a caution or warning indication.

Although the invention has been described and illustrated with respect to exemplary embodiments thereof, it should be understood by those skilled in the art that the foregoing in various other changes, omissions and additions may be made therein and thereto, without departing from the scope of the present invention.

## Claims

1. A helicopter cockpit warning and display system comprising:
display means (52, 53, 59, 67) for providing one or more variable priority indications to a pilot, each of said one or more variable priority indications being associated with corresponding helicopter equipment (20, 22);
means (40,43) for monitoring the operational status of said helicopter equipment and for providing equipment status signals indicative thereof;
signal processing means (48) responsive to said equipment status signals for controlling the priority level of each of said one or more variable priority indications with each of said one or more variable priority indications having a priority level corresponding to the operational status of said corresponding helicopter equipment;
characterized by:
means for monitoring the operational status of the helicopter main rotor (37) and for providing operational status signals indicative of the speed of said helicopter main rotor; and
said signal processing means (48) being further responsive to said operational status signals for comparing the magnitude of said operational status signals to threshold levels, each threshold level corresponding to a different priority indication, and said signal processing means varying the priority of one or more of said variable priority indications when the magnitude of an operational status signal exceeds a threshold level and the operational status of said helicopter equipment remains unchanged.

2. A helicopter cockpit warning and displayed system according to claim 1 wherein each of said priority levels is indicated by a different color.

3. A helicopter cockpit warning and display system according to claim 2 wherein a green indication is indicative of an advisory condition, a yellow indication is indicative of a caution condition and a red indication is indicative of a warning condition.

4. A helicopter cockpit warning and display system according to claim 1 further comprising means (122) for displaying a message to the pilot indicative of the action required to reduce the priority level of an indication.

5. A helicopter cockpit warning and display system according to claim 1 further comprising means for providing a audible signal to accompany an increase in the priority level of one of said indications.

## Patentansprüche

1. Helikopter-Cockpit-Warnungs- und Anzeigesystem mit:
Anzeigeeinrichtungen (52, 53, 59, 67) zum Schaffen von einer oder mehreren Anzeigen mit variabler Priorität für einen Piloten, wobei die eine oder mehreren Anzeigen mit variabler Priorität jeweils entsprechenden Helikopter-Gerätschaften (20, 22) zugeordnet sind; einer Einrichtung (40, 43) zum Überwachen des Betriebsstatus der Helikopter-Gerätschaften und zum Liefern von diesen anzeigenden Gerätschafts-Statussignalen;
einer Signalverarbeitungseinrichtung (48), die auf die Gerätschafts-Statussignale anspricht, um das Prioritätsniveau einer jeden der einen oder mehreren Anzeigen mit variabler Priorität zu steuern, wobei die eine oder mehreren Anzeigen mit variabler Priorität jeweils ein Prioritätsniveau aufweisen, das dem Betriebsstatus der entsprechenden Helikopter-Gerätschaften entspricht;
gekennzeichnet durch:
eine Einrichtung zum Überwachen des Betriebsstatus des Helikopter-Hauptrotors (37) und zum Schaffen von Betriebs-Statussignalen, die die Drehzahl des Helikopter-Hauptrotors anzeigen; und
wobei die Signalverarbeitungseinrichtung (48) ferner auf die Betriebs-Statussignale anspricht, um die Größe der Betriebs-Statussignale mit Schwellenwertniveaus zu vergleichen, wobei jedes Schwellenwertniveau einer Anzeige mit einer anderen Priorität entspricht, und wobei die Signalverarbeitungseinrichtung die Priorität der einen oder mehreren Anzeigen mit variabler Priorität verändert, wenn die Größe eines Betriebs-Statussignals ein Schwellenwertniveau übersteigt und der Betriebsstatus der Helikopter-Gerätschaften unverändert bleibt.

2. Helikopter-Cockpit-Warnungs- und Anzeigesystem nach Anspruch 1,
wobei jedes der Prioritätsniveaus durch eine andere Farbe angezeigt wird.

3. Helikopter-Cockpit-Warnungs- und Anzeigesystem nach Anspruch 2,
wobei eine grüne Anzeige einen Hinweis-Zustand anzeigt, eine gelbe Anzeige einen Vorsichts-Zustand anzeigt und eine rote Anzeige einen Warnungs-Zustand anzeigt.

4. Helikopter-Cockpit-Warnungs- und Anzeigesystem nach Anspruch 1,
ferner mit einer Einrichtung (122) zum Anzeigen einer Nachricht für den Piloten, die die Vorgehensweise anzeigt, die zum Reduzieren des Prioritätsniveaus einer Anzeige erforderlich ist.

5. Helikopter-Cockpit-Warnungs- und Anzeigesystem nach Anspruch 1,
ferner mit einer Einrichtung zum Schaffen eines hörbaren Signals als Begleiterscheinung mit einer Erhöhung des Prioritätsniveaus einer der Anzeigen.

## Revendications

1. Système d'alarme et de visualisation pour cabine de pilotage d'hélicoptère, comprenant:
des moyens d'affichage (52, 53, 59, 67) servant à fournir une ou plusieurs indications à priorité variable à un pilote, chacune parmi ladite une ou plusieurs indications à priorité variable étant associée à un équipement d'hélicoptère (20, 22) correspondant;
des moyens (40, 43) servant à surveiller l'état de fonctionnement dudit équipement d'hélicoptère et à fournir des signaux d'état d'équipement indicatifs de ce dernier;
un moyen de traitement de signaux (48) répondant auxdits signaux d'état d'équipement, afin de contrôler le niveau de priorité de chacune parmi la ou les indications à priorité variable, chacune parmi la ou les indications à priorité variable ayant un niveau de priorité correspondant à l'état de fonctionnement dudit équipement d'hélicoptère correspondant;
caractérisé par:
un moyen de surveillance de l'état de fonctionnement du rotor principal d'hélicoptère (37) et servant à fournir des signaux d'état de fonctionnement indicatifs de la vitesse dudit rotor principal d'hélicoptère; et
ledit moyen de traitement de signaux (48) répondant en outre auxdits signaux d'état de fonctionnement, afin de comparer l'amplitude desdits signaux d'état de fonctionnement à des niveaux seuils, chaque niveau seuil correspondant à une indication à priorité différente, et ledit moyen de traitement de signaux faisant varier la priorité d'une ou plusieurs parmi lesdites indications de priorité variable, lorsque l'amplitude d'un signal d'état de fonctionnement dépasse un niveau seuil et que l'état de fonctionnement dudit équipement d'hélicoptère reste identique.

2. Système d'alarme et de visualisation pour cabine de pilotage d'hélicoptère selon la revendication 1, dans lequel chacun desdits niveaux de priorité est indiqué par une couleur différente.

3. Système d'alarme et de visualisation pour cabine de pilotage d'hélicoptère selon la revendication 2, dans lequel une indication de couleur verte indique un état de conseil, une indication de couleur jaune indique un état de prudence et une indication de couleur rouge indique un état d'alarme.

4. Système d'alarme et de visualisation pour cabine de pilotage d'hélicoptère selon la revendication 1, comprenant en outre un moyen (122) servant à afficher un message au pilote , indiquant l'action requise pour la réduction du niveau de priorité d'une indication.

5. Système d'alarme et de visualisation pour cabine de pilotage d'hélicoptère selon la revendication, comprenant en outre un moyen servant à fournir un signal audible afin d'être associé à une augmentation du niveau de priorité de l'une desdites indications.
